# EUROPÄISCHE PATENTSCHRIFT

(11) **EP 1 883 761 B1**
(45) Veröffentlichungstag und Bekanntmachung des Hinweises auf die Patenterteilung: **30.09.2015**
(21) Anmeldenummer: 06723177.9
(22) Anmeldetag: 03.03.2006
(51) Int. Cl.: F16H 48/10

(54) **DIFFERENTIALANORDNUNG MIT ZENTRIERUNG DER AUSGLEICHSRÄDER**
DIFFERENTIAL ARRANGEMENT FOR CENTRING DIFFERENTIAL GEARS
SYSTEME DE DIFFERENTIEL AVEC CENTRAGE DES PIGNONS DE DIFFERENTIEL

(30) Priorität: 24.05.2005 DE 102005024454
(43) Veröffentlichungstag der Anmeldung: 06.02.2008
(73) Patentinhaber: GKN Driveline International GmbH, 53797 Lohmar (DE)
(72) Erfinder: KRUDE, Werner, 53819 Neunkirchen-Seelscheid (DE); LEUSCHEN, Ralf, 54578 Oberbettingen (DE); ENGELMANN, Michael, 53757 St. Augustin (DE)
(74) Vertreter: Oberwalleney, Stephan
(86) Internationale Anmeldenummer: PCT/EP2006/001930
(87) Internationale Veröffentlichungsnummer: WO 2006/125482

(56) Entgegenhaltungen:
- DE-A1- 10 235 677
- US-A- 2 270 567
- US-A- 3 344 687

## Beschreibung

Die Erfindung betrifft eine Differentialanordnung, die Teil eines Differentialgetriebes ist und insbesondere zum Einsatz im Antriebsstrang eines Kraftfahrzeugs dient. Derartige Differentialanordnungen sind hinreichend bekannt. Sie umfassen üblicherweise einen Differentialkorb, der um eine Drehachse drehend antreibbar ist, zwei Seitenwellenräder, die in dem Differentialkorb drehbar gehalten sind und zur Drehmomentübertragung auf zwei Seitenwellen dienen, sowie mehrere Ausgleichsräder, die gemeinsam mit dem Differentialkorb umlaufen und mit den Seitenwellenrädern in Verzahnungseingriff sind.

Es werden Kegelraddifferentiale und Kronenraddifferentiale unterschieden, die hinsichtlich ihres Aufbaus und ihrer Funktionsweise einander entsprechen, die sich jedoch in bezug auf die Gestalt der Räder unterscheiden. Bei Kegelraddifferentialen, wie sie beispielsweise aus der DE 100 59 684 A1, der DE 32 36 227 A1 oder der CH 571 667 bekannt sind, sind sowohl die Ausgleichsräder als auch die hiermit kämmenden Seitenwellenräder als Kegelräder gestaltet. Die kegelige Form verhindert, daß die Ausgleichsräder in bezug auf die Drehachse nach radial innen wandern können. Bei Kronenraddifferentialen sind die Seitenwellenräder als Kronenräder und die hiermit kämmenden Ausgleichsräder als Stirnräder gestaltet. Durch diese Form sind die Ausgleichsräder auch während des Verzahnungseingriffs mit den Seitenwellenrädern entlang ihrer Zapfenachsen axial verschiebbar. Um zu verhindern, daß die Ausgleichsräder nach in bezug auf die Drehachse nach radial innen wandern, sind bisher verschiedene Lösungen vorgeschlagen worden.

Aus der gattungsgemäßen US 3 344 687 ist ein Differentialgetriebe in Form eines Kronenraddifferentials bekannt. Das Differentialgetriebe weist ein Tellerrad mit einem Hülsenansatz auf in dem ein Zapfen gehalten ist. Auf dem Zapfen sind zwei Differentialräder drehbar gehalten, die in Form von Stirnrädern gestaltet sind. Die Differentialräder kämmen mit den Seitenwellenrädern, die in Form von Kronenrädern gestaltet sind.

Aus der DE 103 54 998 A1 ist eine Differentialanordnung in Form eines Kronenraddifferentials bekannt. Dieses umfaßt drei Ausgleichsräder, die auf einem sternförmigen Trägerelement bestehend aus einem Ring und drei Zapfen gelagert sind. Dabei stellt der Ring in Axialansicht eine Erweiterung des Zapfenquerschnitts dar, so daß die Ausgleichsräder gegen diesen anlaufen können.

Die EP 1 203 900 A2 zeigt ein ähnliches Kronenraddifferential, das ein zentrales Trägerelement mit Zapfen zum Lagern der Ausgleichsräder aufweist. Die Zapfen sind durch Schultern größerer Breite begrenzt, gegen die die Ausgleichsräder anlaufen können.

Aus der US 2 270 567 ist ein Kronenraddifferential bekannt, das zwei auf einem gemeinsamen Zapfen gelagerte Ausgleichsräder umfaßt. Zwischen den beiden Ausgleichsrädern ist eine Hülse auf den Zapfen aufgeschoben, die verhindert, daß die Ausgleichsräder in Richtung zur Drehachse wandern.

Aus der DE 103 08 800 A1 ist ein Kronenraddifferential bekannt, dessen Ausgleichsräder in Lagerausnehmungen des Differentialkorbs drehbar aufgenommen sind, so daß kein Lagerzapfen zur Lagerung der Ausgleichsräder erforderlich ist. Um zu verhindern, daß die Ausgleichsräder radial zur Drehachse wandern, haben diese einen oberseitigen scheibenförmigen Anschlagkörper, der gegen die äußere Mantelfläche der Kronenräder anläuft, sowie einen unterseitigen scheibenförmigen Anschlagkörper, der an einer Verrippung der Kronenräder anläuft.

Es ist Aufgabe der vorliegenden Erfindung eine Differentialanordnung vorzuschlagen, die leicht ist, eine kurze axiale Baugröße aufweist und einfach aufgebaut ist.

Diese Aufgabe wird erfindungsgemäß durch eine Differentialanordnung für den Einsatz im Antriebsstrang eines Kraftfahrzeugs gelöst, umfassend einen Differentialkorb, der um eine Drehachse drehend antreibbar ist; zwei Seitenwellenräder mit Kronenradverzahnung, die im Differentialkorb auf der Drehachse drehbar gehalten sind und jeweils eine umlaufende Stützfläche aufweisen; Ausgleichsräder mit Stirnradverzahnung, die gemeinsam mit dem Differentialkorb um die Drehachse umlaufen und mit den Seitenwellenrädern in Verzahnungseingriff sind und jeweils eine umlaufende Anlagefläche aufweisen; wobei die Ausgleichsräder mit ihren Anlageflächen gegen die Stützflächen der Seitenwellenräder in Richtung zur Drehachse abgestützt sind, und wobei die Anlageflächen der Ausgleichsräder jeweils durch einen axialen Vorsprung gebildet sind, der gegenüber der Stirnverzahnung des jeweiligen Ausgleichsrads einen reduzierten Durchmesser aufweist.

Der Vorteil dieser Differentialanordnung liegt in einer kurzen axialen Baulänge und einem geringen Gewicht, so daß den entsprechenden Forderungen aus der Automobilindustrie Rechnung getragen wird. Die Ausgleichsräder sind radial innen gegen die Seitenwellenräder abgestützt, wobei die Stirnverzahnung mit der Kronenverzahnung kämmt. So wird verhindert, daß sich die Ausgleichsräder in Richtung zur Drehachse verschieben. Durch das unmittelbare Abstützen der Ausgleichsräder gegen die Seitenwellenräder ergibt sich ein einfacher Aufbau mit wenigen Bauteilen, was sich günstig auf die Fertigungs- und Montagekosten auswirkt. Bei gleicher Drehzahl der beiden Seitenwellenräder findet keine Relativbewegung zwischen den Ausgleichsrädern und den Seitenwellenrädern statt. Bei unterschiedlicher Drehzahl der Seitenwellenräder gleiten die Anlageflächen auf den Stützflächen ab, wobei die Drehrichtung im Kontaktbereich zwischen Anlagefläche und Stützfläche die gleiche ist.

Gemäß der Erfindung ist die umlaufende Anlagefläche durch einen axialen Vorsprung des jeweiligen Ausgleichsrads gebildet, der gegenüber der Stirnverzahnung einen reduzierten Durchmesser aufweist. Die umlaufende Stützfläche jedes der Seitenwellenräder ist vorzugsweise durch einen axialen Vorsprung des jeweiligen Seitenwellenrades gebildet, der gegenüber der Kronenradverzahnung einen reduzierten Durchmesser aufweist. Durch die axialen Vorsprünge der Seitenwellenräder ergibt sich eine besonders platzsparende Anordnung. Die axialen Vorsprünge der Seitenwellenräder sind vorzugsweise einstückig mit einer Nabe gestaltet, wobei die Seitenwellenräder im Bereich der Nabe eine größere axiale Erstreckung aufweisen als im Bereich der Kronenverzahnung.

Die axialen Vorsprünge der Ausgleichsräder und der Seitenwellenräder sind vorzugsweise zylindrisch gestaltet, wobei die Anlagefläche eine Stirnfläche und die Stützfläche eine zylindrische Mantelfläche ist. Nach einer hierzu alternativen Ausgestaltung können die axialen Vorsprünge der Ausgleichsräder und der Seitenwellenräder auch konisch sein, wobei die Anlagefläche und die Stützfläche Konusflächen sind. Dies hat den Vorteil, daß im Kontaktbereich zwischen der Anlagefläche und der Stützfläche eine wälzende Relativbewegung auftritt, was sich günstig auf den Verschleiß auswirkt. Andere alternative Formen der Anlagefläche und der Stützfläche sind ebenfalls denkbar. Beispielsweise können die Anlageflächen auch kugelig sein.

Nach einer bevorzugten Ausgestaltung ist ein Zapfen vorgesehen, der Lagerabschnitte zum Lagern der Ausgleichsräder und einen zentralen Abschnitt mit in Bezug auf die Drehachse geringerer axialer Erstreckung aufweist. Dabei ist der zentrale Abschnitt derart gestaltet, daß in die Seitenwellenräder eingesteckte Seitenwellen in diesen eintauchen können. Hierdurch ergibt sich eine besonders kurze axiale Baulänge der Differentialanordnung. Vorzugsweise hat der zentrale Abschnitt des Zapfens einen runden Querschnitt mit einem gegenüber den Lagerabschnitten reduzierten Durchmesser. Alternativ hierzu kann der zentrale Abschnitt des Zapfens auch einen unrunden Querschnitt zur Verdrehsicherung aufweisen. Dies hat den Vorteil, daß die in den zentralen Abschnitt eingreifenden Seitenwellen ein Verdrehen des Zapfens verhindern. So wird der Verschleiß in den Lagerstellen des Zapfens im Differentialkorb bzw. in den Lagerscheiben minimiert, ohne daß hierfür zusätzliche Bauteile erforderlich sind. Die Verdrehsicherung kommt insbesondere bei Verwendung von genau zwei Ausgleichsrädern auf einem einzigen Zapfen zum Tragen. Die Verwendung von lediglich zwei Ausgleichsrädern hat den zusätzlichen Vorteil einer minimierten Anzahl von Bauteilen, so daß die Fertigungs- und Montagekosten reduziert sind. Die Ausgleichsräder können nach einer ersten Variante eine kugelige Kontaktfläche zum Abstützen gegen den Differentialkorb bzw. einer in diesen eingesetzten Lagerscheibe aufweisen. Nach einer zweiten Variante können die Ausgleichsräder auch eine ebene Kontaktfläche zum Abstützen gegen den Differentialkorb bzw. eine in diesen eingesetzte Lagerscheibe aufweisen.

Nach einer bevorzugten Ausgestaltung ist der Differentialkorb einteilig hergestellt, insbesondere mit einstückig angeformten Hülsenansätzen zur Lagerung des Differentialkorbs in einem stehenden Gehäuse. Mit einteilig ist gemeint, daß der Differentialkorb zur Montage der Räder nicht in mehrere Einzelteile zerlegt werden kann, wie es bei mehrteiligen Differentialkörben der Fall ist. Insbesondere kann der Differentialkorb als Gußteil hergestellt sein. Die einteilige Form bietet den Vorteil einer geringen Teilezahl und einer hohen Steifigkeit bei gleichzeitig günstigen Herstellungskosten.

Bevorzugte Ausführungsbeispiele der erfindungsgemäßen Differentialanordnung werden im folgenden anhand der Zeichnung beschrieben. Hierin zeigt
- Figur 1: eine erfindungsgemäße Differentialanordnung in einer ersten Ausführungsform im Längsschnitt;
- Figur 2: den Differentialrädersatz aus Figur 1 im Längsschnitt;
- Figur 3: das Detail X aus Figur 2;
- Figur 4: eine erfindungsgemäße Differentialanordnung in einer zweiten Ausführungsform im Längsschnitt;
- Figur 5: den Differentialrädersatz aus Figur 5 im Längsschnitt;
- Figur 6: das Detail Y aus Figur 5;
- Figur 7: eine erfindungsgemäße Differentialanordnung in einer dritten Ausführungsform im Längsschnitt.

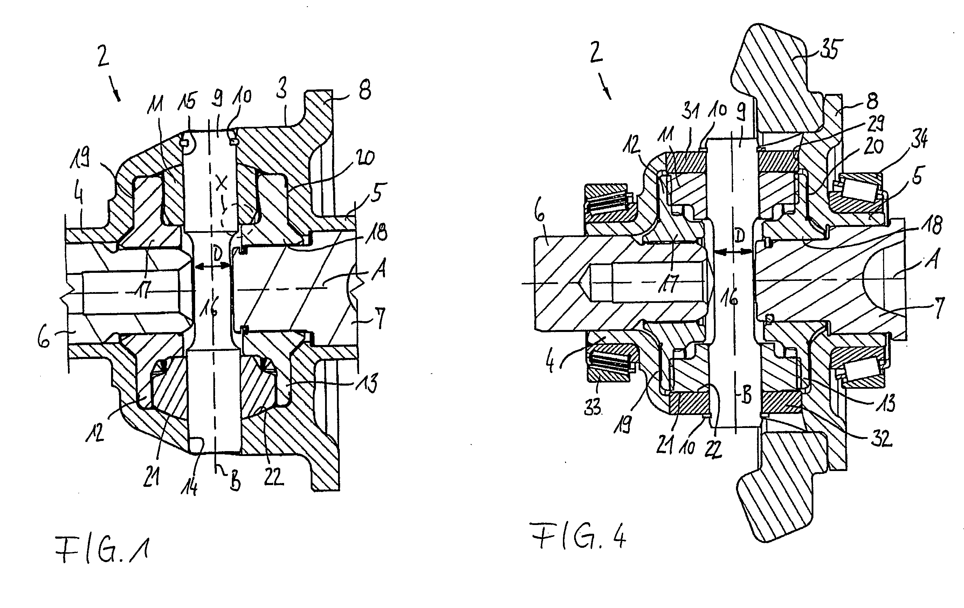

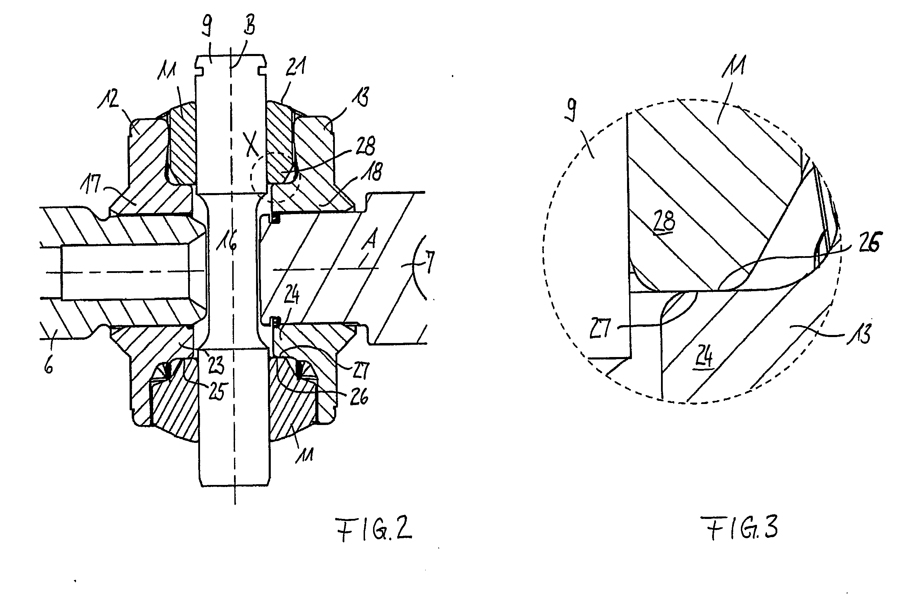

Die in den Figuren 1 bis 3 einerseits und 4 bis 6 andererseits gezeigten Differentialanordnungen 2 entsprechen hinsichtlich ihres Aufbaus und ihrer Funktionsweise einander weitestgehend und werden daher im folgenden zunächst gemeinsam beschrieben. Gleiche Bauteile sind mit gleichen Bezugsziffern versehen. Es ist eine Differentialanordnung 2 mit einem Differentialkorb 3 gezeigt, der in einem nicht dargestellten stehenden Gehäuse zu lagern ist. Hierfür sind an dem Differentialkorb 3 in entgegengesetzte Richtung weisende hülsenförmige Lageransätze 4, 5 angeformt, die zur Aufnahme von Wälzlagern dienen. Der Differentialkorb 3 ist einstückig als Gußteil hergestellt. Dies hat den Vorteil einer hohen Steifigkeit sowie einer geringen Teilezahl, was sich günstig auf die Herstellungskosten auswirkt. Die Differentialanordnung 2 ist Teil eines Differentialgetriebes im Antriebsstrang eines Kraftfahrzeugs und dient zur Drehmomentübertragung von einer nicht dargestellten Längsantriebswelle auf zwei Seitenwellen 6, 7. Hierfür ist an den Differentialkorb 3 ein Flansch 8 angeformt, an dem ein Tellerrad zum Einleiten des Drehmoments in die Differentialanordnung 2 befestigt werden kann.

Das eingeleitete Drehmoment wird über mehrere auf einem Trägerelement 9 drehbar gelagerte und gemeinsam mit dem Differentialkorb 3 umlaufende Ausgleichsräder 11 auf mit diesen kämmende Seitenwellenräder 12, 13 übertragen. Das Trägerelement 9 ist vorliegend in Form eines Zapfens gestaltet, der in radiale Durchbrüche 14,15 im Differentialkorb 3 auf einer zur Drehachse A senkrechten Achse B eingesteckt und mittels eines Sicherungsrings 10 axial fixiert. Der Zapfen 9 hat einen zentralen Abschnitt 16 mit gegenüber den Lagerabschnitten, auf denen die zwei Ausgleichsräder 11 gelagert sind, reduziertem Durchmesser D. So können die in die Seitenwellenräder 12, 13 drehfest eingesteckten Seitenwellen 6, 7 in den zentralen Abschnitt 16 eintauchen, wodurch Bauraum eingespart wird. Die Seitenwellenräder 12, 13 sind gegenüber dem Differentialkorb 3 üblicherweise mittels reibmindernden Anlaufscheiben 19, 20 axial abgestützt.

Die Differentialanordnung 2 ist in Form eines Kronenraddifferentials gestaltet, wobei die Seitenwellenräder 12, 13 als Kronenräder und die Ausgleichsräder 11 als Stirnräder gestaltet sind. Hierdurch ergibt sich ein kompakter Aufbau und ein geringes Gewicht. Bei Kronenraddifferentialen ist die Kronenradverzahnung der Seitenwellenräder 12, 13 radial in Richtung zur Drehachse A ausgerichtet und die Stirnradverzahnung der Ausgleichsräder 11 ist parallel zur Zapfenachse B ausgerichtet. Daher können die Ausgleichsräder 11 prinzipiell auf den Zapfenachsen B nach radial innen oder nach radial außen wandern. Bei Rotation der Differentialanordnung werden die Ausgleichsräder 11 aufgrund von Fliehkräften nach radial außen beschleunigt und legen sich mit ihrer Kontaktfläche 21 gegen eine entsprechend geformte Gegenfläche 22 im Differentialkorb 3 an.

Um bei zu geringen Drehzahlen zu verhindern, daß die Ausgleichsräder 11 nach radial innen zur Drehachse A wandern, haben die Seitenwellenräder 12, 13 in Richtung zur Zapfenachse B gerichtete axiale Vorsprünge 23, 24 mit einer Stützfläche 25, 26, gegen die die Ausgleichsräder 11 mit einer Anlagefläche 27 anlaufen können. Durch das unmittelbare Abstützen der Ausgleichsräder 11 gegen die Seitenwellenräder 12, 13 ergibt sich ein einfacher Aufbau mit wenigen Bauteilen, was sich günstig auf die Fertigungs- und Montagekosten auswirkt. Bei gleicher Drehzahl der beiden Seitenwellenräder 12, 13, d. h. bei ungebremsten Geradeauslauf des Kraftfahrzeugs, findet keine Relativbewegung zwischen den Ausgleichsrädern 11 und den Seitenwellenrädern 12, 13 statt. Bei unterschiedlicher Drehzahl der Seitenwellenräder 12, 13, die bei Kurvenfahrt auftritt, gleiten die Anlageflächen 27 auf den Stützflächen 25, 26 ab, wobei die Drehrichtung im Kontaktbereich zwischen Anlagefläche 27 und Stützfläche 25, 26 jeweils die gleiche ist. Die Maße der axialen Baulänge der Ausgleichsräder 11 und der Durchmesser der Seitenwellenräder 12, 13 im Bereich ihrer Stützflächen 25, 26 einerseits und der Innendurchmesser des Differentialkorbs 3 andererseits sind so gewählt, das - unter Berücksichtigung von Fertigungstoleranzen - ein geringes Spiel zwischen den Ausgleichsrädern 11 und den Seitenwellenrädern 12, 13 bzw. dem Differentialkorb 3 vorgesehen ist. So werden Reibungskräfte zwischen den sich berührenden Bauteilen gering gehalten.

Die Seitenwellenräder 12, 13 sind einstückig mit den Naben 17, 18 gestaltet, in die eine zugehörige Seitenwelle 6, 7 mittels einer Längsverzahnung drehfest eingesteckt ist. Die Naben 17, 18 haben jeweils eine größere axiale Erstreckung als die Kronenradverzahnung, was mit der Höhe des zu übertragenden Drehmoments zusammenhängt, das die Länge der Naben 17, 18 bestimmt. Die in die Naben 17, 18 eingesteckten Seitenwellen 6, 7 ragen über die Stirnfläche des zugehörigen Seitenwellenrads 12, 13 hinaus bis in die Ausnehmung 16 des Zapfens 9 hinein. So wird der axiale Bauraum klein gehalten.

Im folgenden werden die Ausführungsbeispiele im Hinblick auf ihre Unterschiede beschrieben. Bei der Ausführungsform nach den Figuren 1 bis 3 haben die Ausgleichsräder 11 jeweils einen einstückig angeformten axialen Vorsprung 28 mit einer konischen Mantelfläche und einer kreisringförmigen Stirnfläche, die die Anlagefläche 27 bildet. Die Seitenwellenräder 12, 13 haben jeweils einen axialen Vorsprung 23, 24 mit einer zylinderförmigen Mantelfläche, die die Stützfläche 25, 26 bildet und gegen die sich die Ausgleichsräder 11 mit ihren Anlageflächen 27 abstützen. Es ist ersichtlich, daß die Kontaktfläche 21 der Ausgleichsräder 11 kugelig ist und gegen eine entsprechende hohlkugelige Gegenfläche 22 im Differentialkorb 3 zur Anlage kommt. Die in der oberen und der unteren Bildhälfte dargestellten Ausgleichsräder 11 sind identisch, wobei das obere durch eine Zahnlücke und das untere durch einen Zahn geschnitten ist. Die Ausgleichsräder 11 und die Seitenwellenräder 12, 13 sind durch in einer anderen Schnittebene befindliche Montageöffnungen in den Differentialkorb 3 eingesetzt. Vorliegend ist ein einziger Sicherungsring 10 zum Fixieren des Zapfens gegenüber dem Differentialkorb 3 vorgesehen. Der Zapfen 9 hat sowohl in seinen Lagerabschnitten als auch in seinem zentralen Abschnitt kreisrunde Querschnitte.

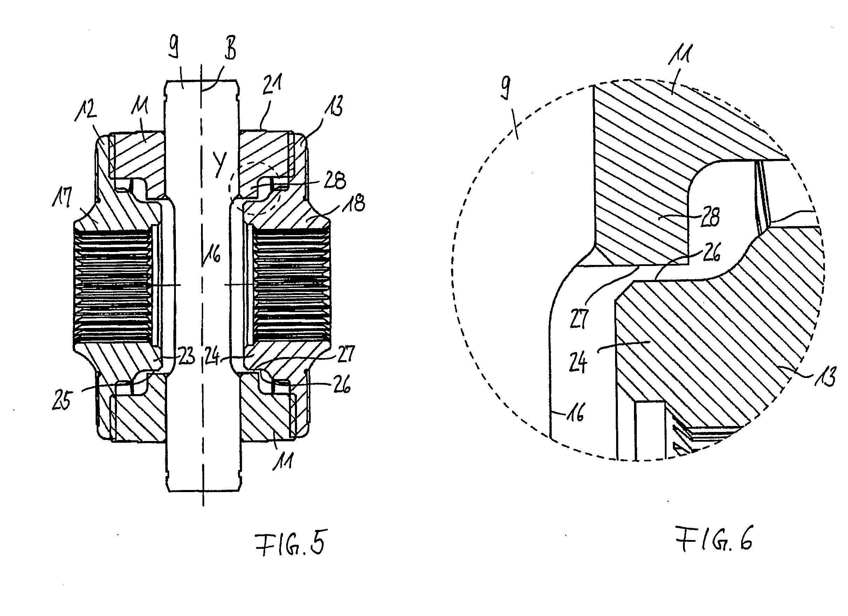

In der Ausführungsform nach den Figuren 4 bis 6 haben die Ausgleichsräder 11 jeweils einen einstückig angeformten axialen Vorsprung 28 mit einer zylinderförmigen Mantelfläche und einer kreisringförmigen Stirnfläche, die die Anlagefläche 27 bildet. Die Seitenwellenräder 12, 13 haben jeweils einen axialen Vorsprung 23, 24 mit einer zylinderförmigen Mantelfläche, die die Stützfläche 25, 26 bildet und gegen die sich die Ausgleichsräder 11 mit ihren Anlageflächen 27 abstützen. Zwischen den ebenen Stirnflächen der Ausgleichsräder 11 und den zylinderförmigen Mantelflächen der Seitenwellenräder ist ein geringes Radialspiel vorgesehen, das hier übertrieben dargestellt ist. Es ist ersichtlich, daß die Kontaktfläche 21 der Ausgleichsräder 11 vorliegend eben ist und gegen eine entsprechend ebene Gegenfläche 22 im Differentialkorb 3 abgestützt ist. In der vorliegenden Ausführungsform werden die Ausgleichsräder 11 und die Seitenwellenräder 12, 13 durch entsprechende Montageöffnungen 29 in den Differentialkorb 3 eingesetzt. Anschließend werden die Montageöffnungen 29 mittels Lagerscheiben 31, 32 verschlossen, in denen der Zapfen 9 gehalten ist und gegen die die Ausgleichsräder 11 abgestützt sind. Der Zapfen 9 ist an seinen beiden Enden mittels Sicherungsringen 10 gegenüber den Lagerscheiben 35, 36 axial fixiert. Der zentrale Abschnitt 16 des Zapfens 9 ist im Querschnitt unrund, d. h. der Zapfen 9 hat zwei entgegengesetzt gerichtete Abflachungen, in die die Seitenwellen 6, 7 mit ihren Enden zur Verdrehsicherung eingreifen können. So wird verhindert, daß sich der gehärtete Zapfen 9 in den ungehärteten Lagerscheiben 31, 32 dreht, was sich günstig auf den Verschleiß auswirkt. In Figur 4 sind auch die Wälzlager 33, 34 zur Lagerung der Differentialanordnung 2 in einem Gehäuse und das Tellerrad 35 zum Einleiten des Drehmoments dargestellt.

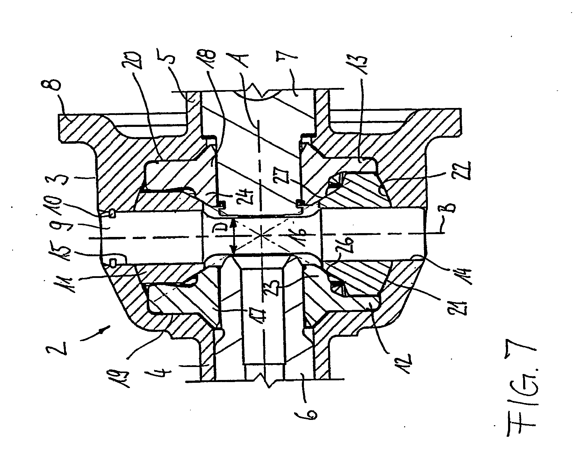

Die Ausführungsform nach Figur 7 entspricht weitestgehend derjenigen gemäß den Figuren 1 bis 3. Auf die obige Beschreibung wird insofern Bezug genommen, wobei gleiche Bauteile mit gleichen Bezugsziffern versehen sind. Die vorliegende Ausführungsform ist dadurch gekennzeichnet, daß die axialen Vorsprünge der Ausgleichsräder und der Seitenwellenräder konisch gestaltet sind, wobei die Anlagefläche und die Stützfläche Konusflächen sind. Dies hat den Vorteil, daß im Kontaktbereich zwischen der Anlagefläche und der Stützfläche die gleiche Geschwindigkeit bei ausschließlich wälzender Relativbewegung vorliegt, was sich günstig auf den Verschleiß auswirkt.

Es versteht sich, daß die einzelnen Merkmale der unterschiedlichen Ausführungsformen beliebig untereinander austauschbar sind. So kann beispielsweise auch die Ausführungsform gemäß Figuren 4 bis 6 konische Anlage- bzw. Stützflächen aufweisen. Weiterhin könnten auch die Ausführungsformen gemäß den Figuren 1 bis 3 bzw. 7 einen Zapfen mit unrundem Querschnitt im zentralen Abschnitt aufweisen.

### Bezugszeichenliste

- 1:
- 2: Differentialanordnung
- 3: Differentialkorb
- 4: Lageransatz
- 5: Lageransatz
- 6: Seitenwelle
- 7: Seitenwelle
- 8: Flansch
- 9: Trägerelement / Zapfen
- 10: Sicherungsring
- 11: Ausgleichsrad
- 12: Seitenwellenrad
- 13: Seitenwellenrad
- 14: Durchbruch
- 15: Durchbruch
- 16: zentraler Abschnitt / Ausnehmung
- 17: Nabe
- 18: Nabe
- 19: Anlaufscheibe
- 20: Anlaufscheibe
- 21: Kontaktfläche
- 22: Gegenfläche
- 23: Vorsprung (Seitenwellenrad)
- 24: Vorsprung (Seitenwellenrad)
- 25: Stützfläche
- 26: Stützfläche
- 27: Anlagefläche
- 28: Vorsprung (Ausgleichsrad)
- 29: Montageöffnung
- 31: Lagerscheibe
- 32: Lagerscheibe
- 33: Wälzlager
- 34: Wälzlager
- 35: Tellerrad

- A: Drehachse
- B: Zapfenachse
- D: Durchmesser

## Patentansprüche

1. Differentialanordnung in Form eines Kronenraddifferentials, insbesondere für den Einsatz im Antriebsstrang eines Kraftfahrzeugs, umfassend
einen Differentialkorb (3), der um eine Drehachse (A) drehend antreibbar ist; zwei Seitenwellenräder (12, 13) mit Kronenradverzahnung, die im Differentialkorb (3) auf der Drehachse (A) drehbar gehalten sind und jeweils eine umlaufende Stützfläche (25, 26) aufweisen;
Ausgleichsräder (11) mit Stirnradverzahnung, die gemeinsam mit dem Differentialkorb (3) um die Drehachse (A) umlaufen und mit den Seitenwellenrädern in Verzahnungseingriff sind und jeweils eine umlaufende Anlagefläche (27) aufweisen;
wobei die Ausgleichsräder (11) mit ihren Anlageflächen (27) gegen die Stützflächen (25, 26) der Seitenwellenräder (12, 13) in Richtung zur Drehachse (A) abgestützt sind, **dadurch gekennzeichnet, daß** die Anlageflächen (27) der Ausgleichsräder (11) jeweils durch einen axialen Vorsprung (28) gebildet sind, der gegenüber der Stirnverzahnung des jeweiligen Ausgleichsrads (11) einen reduzierten Durchmesser aufweist.

2. Differentialanordnung nach Anspruch 1,
**dadurch gekennzeichnet,**
**daß** die Stützflächen (25, 26) der Seitenwellenräder (12, 13) jeweils durch einen axialen Vorsprung (23, 24) gebildet sind, der gegenüber der Kronenradverzahnung des jeweiligen Seitenwellenrads (12, 13) einen reduzierten Durchmesser aufweist.

3. Differentialanordnung nach einem der Ansprüche 1 oder 2,
**dadurch gekennzeichnet,**
**daß** die axialen Vorsprünge (28) der Ausgleichsräder (11) und die axialen Vorsprünge (23, 24) der Seitenwellenräder (12, 13) zylindrisch sind, wobei die Anlagefläche (27) eine Stirnfläche ist und die Stützflächen (25, 26) zylindrische Mantelflächen sind.

4. Differentialanordnung nach einem der Ansprüche 1 oder 2,
**dadurch gekennzeichnet,**
**daß** die axialen Vorsprünge (28) der Ausgleichsräder (11) und die axialen Vorsprünge (23, 24) der Seitenwellenräder (12, 13) konisch sind, wobei die Anlagefläche (27) und die Stützflächen (25, 26) Konusflächen sind.

5. Differentialanordnung nach einem der Ansprüche 2 bis 4,
**dadurch gekennzeichnet,**
**daß** der axiale Vorsprung (23, 24) einstückig mit einer Nabe (17, 18) des Seitenwellenrads (12, 13) ist, wobei das Seitenwellenrad (12, 13) im Bereich seiner Nabe (17, 18) eine größere axiale Erstreckung aufweist als im Bereich seiner Kronenradverzahnung.

6. Differentialanordnung nach einem der Ansprüche 1 bis 5,
**dadurch gekennzeichnet,**
**daß** ein Zapfen (9) vorgesehen ist, der Lagerabschnitte zum Lagern der Ausgleichsräder (11) und einen zentralen Abschnitt (16) mit in Bezug auf die Drehachse (A) geringerer axialer Erstreckung aufweist.

7. Differentialanordnung nach Anspruch 6,
**dadurch gekennzeichnet,**
**daß** in den zentralen Abschnitt (16) in die Seitenwellenräder (12, 13) eingesteckte Seitenwellen (6, 7) eintauchen.

8. Differentialanordnung nach einem der Ansprüche 6 oder 7,
**dadurch gekennzeichnet,**
**daß** der zentrale Abschnitt (16) des Zapfens (9) einen runden Querschnitt mit einem gegenüber den Lagerabschnitten reduzierten Durchmesser aufweist.

9. Differentialanordnung nach einem der Ansprüche 6 oder 7,
**dadurch gekennzeichnet,**
**daß** der zentrale Abschnitt (16) des Zapfens (9) einen unrunden Querschnitt zur Verdrehsicherung aufweist.

10. Differentialanordnung nach einem der Ansprüche 1 bis 9,
**dadurch gekennzeichnet,**
**daß** die Ausgleichsräder (11) eine kugelige Kontaktfläche (21) zum Abstützen im Differentialkorb (3) aufweisen.

11. Differentialanordnung nach einem der Ansprüche 1 bis 9,
**dadurch gekennzeichnet,**
**daß** die Ausgleichsräder (11) eine ebene Kontaktfläche (21) zum Abstützen im Differentialkorb (3) aufweisen.

12. Differentialanordnung nach einem der Ansprüche 1 bis 11,
**dadurch gekennzeichnet,**
**daß** der Differentialkorb (3) einteilig hergestellt ist.

## Claims

1. A differential assembly in the form of a crown gear differential, more particularly for being used in the driveline of a motor vehicle, comprising a differential carrier (3) which is rotatingly drivable around an axis of rotation (A);
two sideshaft gears (12, 13) with crown gear toothing, which are rotatably held in the differential carrier (3) on the axis of rotation (A) and each comprise a circumferential supporting face (25, 26); differential gears (11) with spur gear toothing, which rotate jointly with the differential carrier (3) around the axis of rotation (A) and which engage the sideshaft gears and each comprise a circumferential contact face (27);
wherein the differential gears (11) are supported by their contact faces (27) against the supporting faces (25, 26) of the sideshaft gears (12, 13) towards the axis of rotation (A),
**characterised in**
**that** the contact faces (27) of the differential gears (11) are respectively formed by an axial projection (28) which comprises a reduced diameter relative to the spur gear toothing of the respective differential gear (11).

2. A differential assembly according to claim 1,
**characterised in**
**that** the supporting faces (25, 26) of the sideshaft gears (12, 13) are respectively formed by an axial projection (23, 24) which comprises a reduced diameter relative to the crown gear toothing of the respective sideshaft gear (12, 13).

3. A differential assembly according to any one of claims 1 or 2,
**characterised in**
**that** the axial projections (28) of the differential gears (11) and the axial projections (23, 24) of the sideshaft gears (12, 13) are cylindrical, wherein the contact face (27) is an end face and wherein the supporting faces (25, 26) are cylindrical faces.

4. A differential assembly according to any one of claims 1 or 2,
**characterised in**
**that** the axial projections (28) of the differential gears (11) and the axial projections (23, 24) of the sideshaft gears (12, 13) are conical, wherein the contact face (27) and the supporting faces (25, 26) are conical faces.

5. A differential assembly according to any one of claims 2 to 4,
**characterised in**
**that** the axial projection (23, 24) is integrally formed with a hub (17, 18) of the sideshaft gear (12, 13), wherein the sideshaft gear (12, 13) comprises a greater axial extension in the region of its hub (17, 18) than in the region of its crown gear toothing.

6. A differential assembly according to any one of claims 1 to 5,
**characterised in**
**that** a journal (9) is provided which comprises bearing portions for supporting the differential gears (11) and a central portion (16) having a reduced axial extension with regard to the axis of rotation (A).

7. A differential assembly according to claim 6,
**characterised in**
**that** sideshafts (6, 7) inserted into the sideshaft gears (12, 13) extend into the central portion (16).

8. A differential assembly according to any one of claims 6 or 7,
**characterised in**
**that** the central portion (16) of the journal (9) comprises a round cross-section with a diameter that is reduced relative to the bearing portions.

9. A differential assembly according to any one of claims 6 or 7,
**characterised in**
**that** the central portion (16) of the journal (9) comprises a cross-section which is non-circular to prevent rotation.

10. A differential assembly according to any one of claims 1 to 9,
**characterised in**
**that** the differential gears (11) comprise a spherical contact face (21) for being supported in the differential carrier (3).

11. A differential assembly according to any one of claims 1 to 9,
**characterised in**
**that** the differential gears (11) comprise a planar contact face (21) for being supported in the differential carrier (3).

12. A differential assembly according to any one of claims 1 to 11,
**characterised in**
**that** the differential carrier (3) is produced so as to form one piece.

## Revendications

1. Système de différentiel se présentant sous la forme d'un différentiel à couronne dentée, en particulier pour la mise en oeuvre dans une chaîne cinématique de transmission d'un véhicule automobile, comprenant
un carter de différentiel (3), qui peut être entraîné en rotation autour d'un axe de rotation (A),
deux pignons d'arbre de renvoi de (12, 13) à denture en couronne , qui sont maintenus de manière à pouvoir tourner dans le carter de différentiel (3) autour de l'axe de rotation (A) et comportent respectivement une surface de support périphérique (25, 26),
des pignons de différentiel (11) à denture droite, qui tournent conjointement avec le carter de différentiel (3) autour de l'axe de rotation (A) et sont engrenés dans les pignons d'arbre de renvoi et comportent respectivement une surface d'appui périphérique (27),
pour lequel les pignons de différentiel (11) prennent appui par leurs surfaces d'appui (27) contre les surfaces de support (25, 26) des pignons d'arbre de renvoi (12, 13) en direction de l'axe de rotation (A), **caractérisé en ce que**
les surfaces d'appui (27) des pignons de différentiel (11) sont formées respectivement par une saillie axiale (28) qui comporte un diamètre réduit par rapport à la denture droite du pignon de différentiel respectif (11).

2. Système de différentiel selon la revendication 1 **caractérisé en ce que** les surfaces de support (25, 26) des pignons d'arbre de renvoi (12, 13) sont formées respectivement par une saillie axiale (23, 24), qui comporte un diamètre réduit vis-à-vis de la denture en couronne dun pignon planétaire respectif (12, 13).

3. Système de différentiel selon l'une quelconque des revendications 1 ou 2 **caractérisé en ce que** les saillies axiales (28) des pignons de différentiel (11) et les saillies axiales (23, 24) des pignons d'arbre de renvoi (12, 13) sont cylindriques, pour lequel la surface d'appui (27) est une surface de face et les surfaces de support (25, 26) sont des surfaces d'enveloppe cylindriques.

4. Système de différentiel selon l'une quelconque des revendications 1 ou 2 **caractérisé en ce que** les saillies axiales (28) des pignons de différentiel (11) et les saillies axiales (23, 24) des pignons d'arbre de renvoi (12, 13) sont coniques, pour lequel la surface d'appui (27) et les surfaces de support (25, 26) sont des surfaces coniques.

5. Système de différentiel selon l'une quelconque des revendications 2 à 4 **caractérisé en ce que** la saillie axiale (23, 24) est en une seule pièce avec un moyeu (17, 18) du pignon planétaire (12, 13), pour lequel le pignon planétaire (12, 13) comporte dans la zone de son moyeu (17, 18) une extension axiale plus grande que dans la zone de sa denture en couronne.

6. Système de différentiel selon l'une quelconque des revendications 1 à 5 **caractérisé en ce qu'**un tourillon (9) est prévu qui comporte des sections de palier pour loger les pignons de différentiel (11) et une section centrale (16) avec une extension axiale plus faible par rapport à l'axe de rotation (A).

7. Système de différentiel selon la revendication 6 **caractérisé en ce que** des arbres de commande (6, 7) emmanchés dans les pignons d'arbre de renvoi (12, 13) plongent dans la section centrale (16).

8. Système de différentiel selon l'une quelconque des revendications 6 ou 7 **caractérisé en ce que** la section centrale (16) du tourillon (9) comporte une section ronde avec un diamètre réduit par rapport aux sections de palier.

9. Système de différentiel selon l'une quelconque des revendications 6 ou 7 **caractérisé en ce que** la section centrale (16) du tourillon (9) comporte une section excentrique destinée à la sécurité antitorsion.

10. Système de différentiel selon l'une quelconque des revendications 1 à 9 **caractérisé en ce que** les pignons de différentiel (11) comportent une surface de contact sphérique (21) pour appui dans le carter de différentiel (3).

11. Système de différentiel selon l'une quelconque des revendications 1 à 9 **caractérisé en ce que** les pignons de différentiel (11) comportent une surface de contact plane (21) pour appui dans le carter de différentiel (3).

12. Système de différentiel selon l'une quelconque des revendications 1 à 11 **caractérisé en ce que** le carter de différentiel (3) est fabriqué en une pièce.
